# EUROPÄISCHE PATENTSCHRIFT

(11) **EP 1 422 365 B1**
(45) Veröffentlichungstag und Bekanntmachung des Hinweises auf die Patenterteilung: **17.12.2014**
(21) Anmeldenummer: 03023072.6
(22) Anmeldetag: 14.10.2003
(51) Int. Cl.: B25B 13/00, B25B 13/48, B25B 15/00, H02B 3/00

(54) **Schaltschrankschlüssel**
Key for switchgear cabinet
Clé pour armoire électrique

(30) Priorität: 31.10.2002 DE 20216931 U
(43) Veröffentlichungstag der Anmeldung: 26.05.2004
(73) Patentinhaber: Schuebo GmbH, 57223 Kreuztal (DE)
(72) Erfinder: Schünke, Hermann, 57271 Hilchenbach (DE)
(74) Vertreter: Lippert, Stachow & Partner

(56) Entgegenhaltungen:
- DE-A1- 19 614 304
- DE-U1- 20 207 136
- DE-U1- 29 617 973
- DE-U1- 29 815 246
- US-A- 3 877 327

## Beschreibung

Die Erfindung betrifft einen Schaltschrankschlüssel mit einem zentralen Grundkörper, von dem mehrere Schlüsselarme radial abstehen, an denen Werkzeugköpfe angeordnet sind.

Ein bekannter Schaltschrankschlüssel weist, beispielsweise gemäß Gebrauchsmuster DE 296 17 973 U1, einen zentralen Grundkörper mit vier radial abstehenden Schlüsselarmen auf, die einen Schlüsselkreuz bilden. An den Schlüsselarmen sind Werkzeugköpfe angeordnet, die zur Betätigung unterschiedlicher Schaltschrankschlösser unterschiedliche Kopfformen aufweisen.

Aus der Offenlegungsschrift DE 196 14 304 ist ein andersartiges Multifunktionswerkzeug für die Heizkörperanbindung bekannt mit drei radial abstehenden Werkzeugarmen zur Montage von Heizkörpern mit Metallkunststoffverbundrohr. Der zentrale Grundkörper dieses Werkzeugs weist wenigstens einen zusätzlichen Sechskant auf zur Montage der Entlüfter am Heizkörper.

Um die Vielfalt und Verwendungsmöglichkeit der Werkzeugköpfe eines Schaltschrankschlüssels zu erhöhen ist es bekannt, ein Einsteckwerkzeug und/oder ein Adapterstück mit einer Verliersicherung an dem Schaltschrankschlüssel anzubringen. Dadurch kann ein Werkzeugkopf direkt verwendet werden. Alternativ wird das Einsteckwerkzeug in dem Werkzeugkopf eingesetzt oder über das Adapterstück an einem Werkzeugkopf angebracht und mit dem Einsteckwerkzeug geschraubt anstatt mit dem Werkzeugkopf selbst.

Der Erfindung liegt die Aufgabe zu Grunde, die Vorteile des bekannten Schaltschrankschlüssels beizubehalten und dessen Verwendungsmöglichkeiten zu vervielfältigen.

Erfindungsgemäß wird die Aufgabe durch einen Schaltschrankschlüssel gemäß

Anspruch 1 gelöst.

Die Vierkantaufnahme ist hohl. Sie kann an einen üblichen 5 mm-Außenvierkant eines Heizungsentlüftungsventils angesetzt werden. Der Schaltschrankschlüssel eignet sich besonders für die Betätigung von Entlüftungsventilen, die in kurzem Abstand vor einer Wand montiert sind, weil ein herkömmlicher Ventilschlüssel bei derartig engen Platzverhältnissen nicht zu verwenden ist. Der besondere Vorteil des zusätzlichen Werkzeugkopfes besteht darin, diesen an besonders engen Stellen ansetzen zu können. Dort, wo sich ein an einem Schlüsselarm angeordneter Werkzeugkopf aus Platzgründen nicht ansetzen ließe. Dies ist beispielsweise dann der Fall, wenn ein Schloss oder eine Schraube in einer Nische schlecht zugänglich sind.

Zweckmäßig sind die Schlüsselarme in einer Ebene angeordnet.

Günstig handzuhaben ist ein Schaltschrankschlüssel, an dem vier Schlüsselarme vorgesehen sind, die ein Schlüsselkreuz bilden. Die Einleitung eines Drehmoments in ein Schloss oder eine Schraube lässt sich dann sehr gut durch zwei sich gegenüberliegende Schlüsselarme vornehmen, über die sich bei einhändiger oder beidhändiger Handhabung gleichmäßig ein Drehmoment einleiten lässt.

In einer weiteren vorteilhaften Alternative bildet der zentrale Grundkörper zu beiden Seiten der radial abstehenden Schlüsselarme je einen zusätzlichen Werkzeugkopf. An dem zentralen Grundkörper sind somit bereits zwei Werkzeugköpfe angeordnet, die unterschiedliche Werkzeugformen aufweisen können, und die die Werkzeugköpfe der Schlüsselarme ergänzen.

Ein weiterer Nutzen besteht dann, wenn mindestens ein drehfest verbindbares Einsteckwerkzeug sowie mindestens eine Drehfestaufnahme für das Einsteckwerkzeug vorgesehen ist. Die Drehfestaufnahme ist günstig in einen Werkzeugkopf bzw. am Grund des Werkzeugkopfes in einen Schlüsselarm eingelassen.

Günstigerweise ist in der Drehfestaufnahme für das Einsteckwerkzeug ein Dauermagnet vorgesehen. Mit dem Dauermagneten wird ein Herausfallen des Einsteckwerkzeuges aus der Drehfestaufnahme verhindert.

Eine weitere Maßnahme zur Vervielfältigung der Einsatzmöglichkeiten ist das Vorsehen eines Adapterstücks zur Aufnahme des Einsteckwerkzeugs, wobei das Adapterstück an wenigstens einem der Werkzeugköpfe anbringbar ist.

Zweckmäßig ist das Einsteckwerkzeug mit einer Verliersicherung angebracht. Die Verliersicherung verbindet den Schaltschrankschlüssel mit dem Einsteckwerkzeug.

Einfacherweise ist als Verliersicherung eine Kette vorgesehen.

Als günstig hat sich erwiesen, wenn seitlich an dem zentralen Grundkörper und zwischen zwei Schlüsselarmen ein Befestigungsteil für die Verliersicherung vorgesehen ist. Bei einer Form eines Befestigungsteils handelt es sich um eine Lasche mit einer Öffnung. Die Kette ist dabei durch die Öffnung der Lasche geführt und beispielsweise ringförmig geschlossen, weil das Einsteckwerkzeug mit einer Bohrung an der Ringkette angehängt ist.

Nützlich ist es, wenn das Einsteckwerkzeug einen sechskantigen ist vorteilhaft für sogenannte Schrauberbits ausgelegt, die beispielsweise mit elektrischen Akku-Schraubern angewendet werden.

Das Einsteckwerkzeug ist günstigerweise ein Schraubwerkzeug.

Der Nutzen kann verbessert werden, wenn das Schraubwerkzeug an gegenüberliegenden Enden unterschiedliche Schraubantriebe aufweist. Dies kann beispielsweise ein flacher Schraubenzieherantrieb sein und ein Kreuzschlitzantrieb an dem gegenüberliegenden Ende des Schraubwerkzeugs.

Vorteilhaft weist ein Werkzeugkopf ein pyramidenförmiges Steckelement auf, ansetzbar an unterschiedlich große Vierkantöffnungen. Das Steckelement wird beispielsweise eingesetzt, um Türen zu öffnen, die bei der Montage zunächst ohne Türgriff eingebaut werden. Da für die Schlösser unterschiedlich große Vierkantöffnungen üblich sind, in denen ein Türgriff einsteckbar ist, kann mit dem pyramidenförmigen Steckelement jedes übliche Türschloss geöffnet werden. Übliche Vierkantöffnungen von Türschlössern weisen beispielsweise eine Kantenlänge von 6 mm oder 8 mm auf.

Nachstehend ist die Erfindung in einer Zeichnung beispielhaft dargestellt und anhand der einzelnen Figuren detailliert erläutert. Es zeigen:
- Figur 1: einen Schaltschrankschlüssel mit Verliersicherung, Einsteckwerkzeug und Adapter,
- Figur 2: eine Schnittansicht gemäß II-II aus Figur 1.

Nach der Zeichnung besteht der Schaltschrankschlüssel 1 aus einem zentralen Grundkörper 2 mit vier radial abstehenden Schlüsselarmen 3, 4, 5 und 6, die ein Schlüsselkreuz bilden und an denen Werkzeugköpfe 3a, 4a, 5a und 6a angeordnet sind.

An dem zentralen Grundkörper 2 ist ein zusätzlicher Werkzeugkopf 7 vorgesehen. Dieser ist etwa senkrecht zu den radialen Schlüsselarmen 3, 4, 5 und 6 ausgerichtet. Die Schlüsselarme 3, 4, 5 und 6 sind in einer Ebene angeordnet. Seitlich an dem zentralen Grundkörper 2 und zwischen zwei Schlüsselarmen 3 und 6 ist ein Befestigungsteil 8 für eine Verliersicherung vorgesehen. Das Befestigungsteil 8 ist als einen Lasche mit einer Öffnung 8a ausgebildet. Als Verliersicherung ist eine ringförmig geschlossene Kette 9 vorgesehen. Auf der Kette 9 ist ein Einsteckwerkzeug 10 und ein Adapterstück 11 aufgehängt. Das Einsteckwerkzeug 10 ist ein Schraubwerkzeug in Form eines sogenannten Bits. Es weist einen Endes einen Schraubenzieherantrieb 10a und anderen Endes einen Kreuzschlitzantrieb 10b auf. Der Umfangsbereich des Schraubwerkzeugs ist sechskantig, weist mit anderen Worten einen sechskantigen Querschnitt auf. Das Adapterstück 11 ist mit einem Vierkantanschluss 11a versehen, mit dem er in den Werkzeugkopf 3a passt, der eine hohle Vierkantaufnahme 3b aufweist. Das dem Vierkantanschluss 11a gegenüberliegende Ende des Adapterstücks 11 weist eine Sechskantöffnung 11b auf, deren Querschnitt dem sechskantigen Querschnitt des Einsteckwerkzeugs 10 entspricht und ebenfalls als Aufnahme für dieses dient.

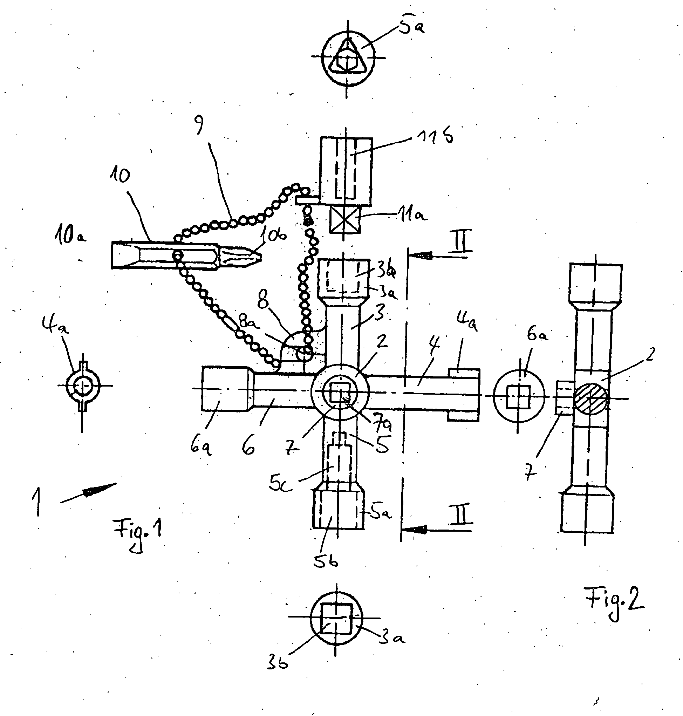

In Figur 1 sind einzelne Draufsichten auf die Werkzeugköpfe 3a, 4a, 5a und 6a dargestellt. Diese Draufsichten zeigen jeweils den Querschnitt des gegenüberliegenden Werkzeugkopfs. So ist zum Beispiel die Draufsicht des Werkzeugkopfes 3a auf der Seite des Schlüsselarms 5 dargestellt. Umgekehrt ist die Draufsicht des gegenüberliegenden Werkzeugkopfs 5a auf der Seite des Schlüsselarms 3 dargestellt. Für die übrigen beiden Werkzeugköpfe 4a und 6a gilt das Gleiche. Auch deren Draufsichten sind jeweils auf der gegenüberliegenden Seite des Schaltschrankschlüssels dargestellt.

Der Werkzeugkopf 5a mit der Dreikantöffnung 5b weist eine in den Grund der Dreikantöffnung 5b eingelassene sechskantige Drehfestaufnahme 5c für das Einsteckwerkzeug 10 auf. In dem Boden der Drehfestaufnahme 5c wiederum ist eine Ausnehmung 5d vorgesehen, in der ein Dauermagnet einsetzbar ist.

In Figur 2 ist eine Schnittdarstellung gemäß II-II aus Figur 1 dargestellt. An dem zentralen Grundkörper 2 ist der zusätzliche Werkzeugkopf 7 angeordnet, der senkrecht zu den radialen Schlüsselarmen 3, 4, 5 und 6 des Schaltschrankschlüssels ausgerichtet ist. Der zusätzliche Werkzeugkopf 7 weist eine Vierkantöffnung 7a mit einer Kantenlänge von 5 mm auf. Der zusätzliche Werkzeugkopf 7 ist daher passend für Entlüftungsventile von Heizkörpern. Eine Vorderansicht der Vierkantöffnung des zusätzlichen Werkzeugkopfs ist in Figur 1 dargestellt.

Das Einsteckwerkzeug des Adapterstücks sowie die Kette sind lose Bauteile, die an dem Schaltschrankschlüssel angebracht sind. Der Schaltschrankschlüssel selbst ist als einstückiges Zink-Druckgussteil geformt.

### Bezugszeichenliste

- 1: Schaltschrankschlüssel
- 2: Zentraler Grundkörper
- 3: Schlüsselarm
- 3a: Werkzeugkopf
- 3b: Vierkantaufnahme
- 4: Schlüsselarm
- 4a: Werkzeugkopf
- 5: Schlüsselarm
- 5a: Werkzeugkopf
- 5b: Dreikantöffnung
- 5c: Drehfestaufnahme
- 5d: Ausnehmung
- 6: Schlüsselarm
- 6a: Werkzeugkopf
- 7: Zusätzlicher Werkzeugkopf
- 8: Befestigungsteil
- 8a: Öffnung
- 9: Kette
- 10: Einsteckwerkzeug
- 10a: Schraubenzieherantrieb
- 10b: Kreuzschlitzantrieb
- 11: Adapterstück
- 11a: Vierkantanschluss
- 11b: Sechskantöffnung

## Patentansprüche

1. Schaltschrankschlüssel (1) mit einem zentralen Grundkörper (2), von dem mehrere Schlüsselarme (3, 4, 5, 6) radial abstehen, an denen Werkzeugköpfe (3a, 4a, 5a, 6a) angeordnet sind die zur Betätigung unterschiedlicher Schaltschrankschlösser unterschiedliche Kopfformen aufweisen, **dadurch gekennzeichnet, dass** der zentrale Grundkörper (2) wenigstens einen zusätzlichen Werkzeugkopf (7) aufweist, der etwa senkrecht zu den radialen Schlüsselarmen (3, 4, 5, 6) ausgerichtet ist, und dass der zusätzliche Werkzeugkopf (7) des zentralen Grundkörpers (2) eine Vierkantaufnahme (7a) aufweist, mit der ein Entlüftungsventil eines Heizkörpers zu öffnen und zu schließen ist.

2. Schaltschrankschlüssel nach Anspruch 1, **dadurch ge- kennzeichnet,** dass die Schlüsselarme (3, 4, 5, 6) in einer Ebene angeordnet sind.

3. Schaltschrankschlüssel nach Anspruch 1 oder 2, **dadurch gekennzeichnet, dass** vier Schlüsselarme (3, 4, 5, 6) vorgesehen sind, die ein Schlüsselkreuz bilden.

4. Schaltschrankschlüssel nach einem der Ansprüche 1 bis 3, **dadurch gekennzeichnet, dass** der zentrale Grundkörper (2) zu beiden Seiten der radial abstehenden Schlüsselarme (3, 4, 5, 6) je einen zusätzlichen Werkzeugkopf (7) bildet.

5. Schaltschrankschlüssel nach einem der Ansprüche 1 bis 4, **dadurch gekennzeichnet, dass** mindestens ein drehfest verbindbares Einsteckwerkzeug (10) sowie mindestens eine Drehfestaufnahme (5c, 11b) für das Einsteckwerkzeug (10) vorgesehen ist.

6. Schaltschrankschlüssel nach Anspruch 5, **dadurch gekennzeichnet, dass** in der Drehfestaufnahme (5c) für das Einsteckwerkzeug (10) ein Dauermagnet vorgesehen ist.

7. Schaltschrankschlüssel nach Anspruch 5 oder 6, **da durch gekennzeichnet, dass** ein Adapterstück (11) zur Aufnahme des Einsteckwerkzeugs (10) vorgesehen ist, wobei das Adapterstück (11) an wenigstens einem der Werkzeugköpfe (3, 4, 5, 6) anbringbar ist.

8. Schaltschrankschlüssel nach einem der Ansprüche 1 bis 7, **dadurch gekennzeichnet, dass** das Einsteckwerkzeug (10) mit einer Verliersicherung angebracht ist.

9. Schaltschrankschlüssel nach Anspruch 8, **dadurch gekennzeichnet, dass** als Verliersicherung eine Kette (9) vorgesehen ist.

10. Schaltschrankschlüssel nach Anspruch 8 oder9, **dadurch gekennzeichnet, dass** seitlich an dem zentralen Grundkörper (2) und zwischen zwei Schlüsselarmen (3, 4, 5, 6) ein Befestigungsteil (8) für die Verliersicherung vorgesehen ist.

11. Schaltschrankschlüssel nach einem der Ansprüche 5 bis 10, **dadurch gekennzeichnet, dass** das Einsteckwerkzeug (10) einen sechskantigen Umfangsbereich aufweist, der in eine an einem Werkzeugkopf (5a) vorgesehene Drehfestaufnahme (5c) einsetzbar ist.

12. Schaltschrankschlüssel nach einem der Ansprüche 5 bis 11, **dadurch gekennzeichnet, dass** das Einsteckwerkzeug (10) ein Schraubwerkzeug ist.

13. Schaltschrankschlüssel nach Anspruch 12, **dadurch gekennzeichnet, dass** das Schraubwerkzeug an gegenüberliegenden Enden unterschiedliche Schraubantriebe (10a, 10b) aufweist.

14. Schaltschrankschlüssel nach einem der Ansprüche 1 bis 13, **dadurch gekennzeichnet, dass** ein Werkzeugkopf ein pyramidenförmiges Steckelement aufweist, ansetzbar an unterschiedlich große Vierkantöffnungen.

15. Schaltschrankschlüssel nach einem der Ansprüche 1 bis 14, bestehend aus Kunststoff oder Druckguss.

## Claims

1. Key (1) for switchgear cabinet, said key comprising a central base body (2) with several key arms (3, 4, 5, 6) radially protruding therefrom and having arranged thereon tool heads (3a, 4a, 5a, 6a) with different tool head shapes for operating different switch gear cabinet locks, **characterized in that** said central base body (2) includes at least one additional tool head (7), which is approximately vertically aligned with respect to said radial key arms (3, 4, 5, 6), and that said additional tool head (7) of said central base body (2) comprises a square seat (7a) with which an air bleed valve of a radiator can be opened and closed.

2. Key for switchgear cabinet according to claim 1, **characterized in that** said key arms (3, 4, 5, 6) are arranged in one plane.

3. Key for switchgear cabinet according to claim 1 or 2, **characterized in that** four key arms (3, 4, 5, 6) are provided, which form a key cross.

4. Key for switchgear cabinet according to one of the claims 1 to 3, **characterized in that** said central base body (2) forms an additional tool head (7) on each of the two sides of the radially protruding key arms (3, 4, 5,6).

5. Key for switchgear cabinet according to one of the claims 1 to 4, **characterized in that** there are provided at least one plug-in tool (10) that can be connected in a rotationally fixed manner as well as at least one rotationally fixed seat (5c, 11 b) for said plug-in tool (10).

6. Key for switchgear cabinet according to claim 5, **characterized in that** a permanent magnet is provided within said rotationally fixed seat (5c) for said plug-in tool (7).

7. Key for switchgear cabinet according to claim 5 or 6, **characterized in that** an adapter piece (11) for receiving said plug-in tool (10) is provided, wherein said adapter piece (11) can be attached to at least one of said tool heads (3, 4, 5, 6).

8. Key for switchgear cabinet according to one of the claims 1 to 7, **characterized in that** said plug-in tool (10) is mounted together with a captive device.

9. Key for switchgear cabinet according to claim 8, **characterized in that** a chain (9) is provided as a captive device.

10. Key for switchgear cabinet according to claim 8 or 9, characterized that laterally on said central base body (2) and between two key arms (3, 4, 5, 6) a fixing element (8) for said captive device is provided.

11. Key for switchgear cabinet according to one of the claims 5 to 10, **characterized in that** said plug-in tool (10) has a hexagonal peripheral part that can be inserted in a rotationally fixed seat (5c) provided on a tool head (5a).

12. Key for switchgear cabinet according to one of the claims 5 to 11, **characterized in that** said plug-in tool (10) is a screwing tool.

13. Key for switchgear cabinet according to claim 12, **characterized in that** said screwing tool includes different screw drives (10a, 10b) on its opposing ends.

14. Key for switchgear cabinet according to one of the claims 1 to 13, **characterized in that** a tool head comprises a pyramid-shaped plug-in element that can be engaged with differently sized square holes.

15. Key for switchgear cabinet according to one of the claims 1 to 14, consisting of a synthetic material or a die cast material.

## Revendications

1. Clé pour armoire électrique (1) comportant un corps de base central (2) avec plusieurs bras de clé (3, 4, 5, 6) radialement saillant sur ledit corps de base et munis des têtes d'outil (3a, 4a, 5a, 6a) ayant des formes de tête différentes pour manoeuvrer des serrures pour armoire électrique différentes, **caractérisée en ce que** le corps de base central (2) comporte au moins une tête d'outil (7) additionnelle alignée à peu près verticalement par rapport aux bras de clé radiales (3, 4, 5, 6) et **en ce que** la tête d'outil (7) additionnelle du corps de base central (2) comporte un logement à quatre pans (7a) pour ouvrir et fermer une soupape de purge d'un radiateur.

2. Clé pour armoire électrique selon la revendication 1, **caractérisée en ce que** les bras de clé (3, 4, 5, 6) sont disposés dans un même plan.

3. Clé pour armoire électrique selon la revendication 1 ou 2, **caractérisée en ce qu'**il sont prévus quatre bras de clé (3, 4, 5, 6) formant une croix de clé.

4. Clé pour armoire électrique selon l'une des revendications 1 à 3, **caractérisée en ce que** le corps de base central (2) forme une tête d'outil (7) additionnelle des deux côtés du chacun des bras de clé (3, 4, 5, 6) radialement saillants.

5. Clé pour armoire électrique selon l'une des revendications 1 à 4, **caractérisée en ce qu'**est prévu au moins un outil à emboîtement (10) agencé pour une connexion fixe en rotation ainsi qu'au moins un logement fixe en rotation (5c, 11 b) pour ledit outil à emboîtement (10).

6. Clé pour armoire électrique selon la revendication 5, **caractérisé en ce qu'**à l'intérieur du logement fixe en rotation (5c) pour l'outil à emboîtement (10) est prévu un aimant permanent.

7. Clé pour armoire électrique selon la revendication 5 ou 6, **caractérisée en ce qu'**est prévue une pièce d'adaptateur (11) pour recevoir ledit outil à emboîtement (10), la pièce d'adaptateur pouvant être installée sur une au moins des têtes d'outil (3, 4, 5, 6).

8. Clé pour armoire électrique selon l'une des revendications 1 à 7, **caractérisée en ce que** l'outil à emboîtement (10) est monté avec protection antiperte.

9. Clé pour armoire électrique selon la revendication 8, **caractérisée en ce qu'**une chaîne (9) est prévue comme protection antiperte.

10. Clé pour armoire électrique selon la revendication 8 ou 9, **caractérisée en ce que** sur le côté du corps de base (2) et entre deux bras de clé (3, 4, 5, 6) est prévu un élément de fixation (8) pour le dispositif antiperte.

11. Clé pour armoire électrique selon l'une des revendications 5 à 10, **caractérisée en ce que** l'outil à emboîtement (10) comporte une partie circonférentielle hexagonale agencée pour être insérée dans un logement fixe en rotation (5c) prévu sur la tête d'outil (5a).

12. Clé pour armoire électrique selon l'une des revendications 5 à 11, **caractérisée en ce que** ledit outil à emboîtement (10) est un outil de serrage.

13. Clé pour armoire électrique selon la revendication 12, **caractérisée en ce que** l'outil de serrage comporte des dispositifs de commande à vis différents (10a, 10b) aux extrémités opposées.

14. Clé pour armoire électrique selon l'une des revendications 1 à 13, **caractérisée en ce qu'**une tête d'outil comporte un élément à emboîtement en forme de pyramide et agencé pour être engagé dans des trous carrés de dimensions différentes.

15. Clé pour armoire électrique selon l'une des revendications 1 à 14, consistant en matière plastique ou en fonte injectée.
